# EUROPEAN PATENT APPLICATION

(11) **EP 1 731 955 A1**
(43) Date of publication of application: **13.12.2006**
(21) Application number: 05012441.1
(22) Date of filing: 09.06.2005
(51) Int. Cl.: G03B 15/05, G03B 15/06, G02B 27/09, F21V 7/06, F21V 14/06

(54) **Flash device for an electronic equipment for a wireless communication system and method for operating a flash device for an electronic equipment**

(71) Applicant: Sony Ericsson Mobile Communications AB, 221 88 Lund (SE)
(72) Inventor: Wernersson, Mats, Nya Vattentornet 221 88 Lund (SE)
(74) Representative: Körber, Martin Hans

(57) **Abstract**

The present invention relates to a flash device for an electronic equipment comprising a light source (6) for producing a flash light, a reflector (5) for collimating the light from the light source (6) into a parallel light beam (1) and two lens panels (3a, 3b) positioned in the parallel light beam (1) and being movable in relation to each other for varying the coverage angle of the light beam (1), whereby each lens panel (3a, 3b) consists of a plurality of lenses (4) and whereby the lens panels (3a, 3b) are movable in a direction parallel to the light beam (1).

The present invention further relates to a method for operating a flash device for an electronic equipment.

## Description

### TECHNICAL FIELD OF THE INVENTION

The present invention relates to a flash device for an electronic equipment for a wireless communication system. Specifically, the present invention relates to the problem of providing a flash device for a camera adapted to the requirements of an electronic equipment for a wireless communication system.

### DESCRIPTION OF RELATED ART

At present, most electronic equipments for a wireless communication system, such as mobile telephones, pagers, personal digital assistants, electronic organisers and so forth, are equipped with a digital camera. For this digital camera a good flash light is essential when the user likes to take pictures in subdued lighting conditions, e.g. home indoors environments, restaurants or the like. Specific requirements arise in case that an optical zoom lens is used. A first problem is that an optical zoom lens typically requires more light than a fixed focal length lens does. This is due to a higher f-number (smaller aperture) but also a consequence of said zoom's magnification which allows the user to take telephoto pictures at longer subject distances. A second problem is that for an optical zoom lens the flash light must have enough coverage to light up the whole scene when the zoom lens is set in the wide-angle position. If the flash light lacks means for adjusting the angle of coverage much light will be wasted when said zoom is set to the tele-position.

A first step towards the solution of the above-mentioned problems is to use a Xenon flash lamp instead of an LED as a Xenon flash is far more effective than an LED flash. A second approach is to provide an adjustable zoom flash head with movable lenses and/or a movable reflector. An example for a flash head with a movable lens is revealed in document US 6,782,197 B2. This document provides a flash head consisting of a reflector, a light source and a Fresnel lens. Hereby, the distance between the Fresnel lens and the reflector is varied in order to vary the flash angle of illumination.
The disadvantage of the flash head provided in this document is that due to the required movements of the Fresnel lens it is not small enough to be implemented into an electronic equipment.

A flash head with a more compact size is revealed in document EP 0 757 280 A2. This document reveals a flash head with an adjustable wave-lens device including first and second wave-lens elements and means for displacing one of the wave-lens elements with respect to the other in a direction perpendicular to the beam in order to adjust the scene coverage angle of the beam.

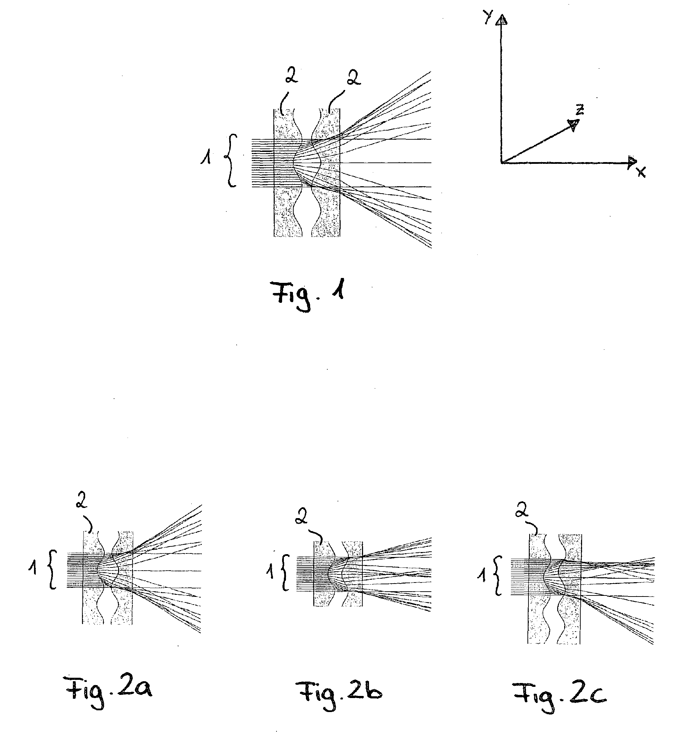

This flash head according to the state of art is shown in Fig. 1 of the present description. Hereby, two wave-lens elements 2 are placed in the parallel light beam 1 in order to change the scene coverage angle of the beam. Assuming that the direction of the beam 1 is along the x-axis, then the wave-lens elements are movable in directions perpendicular to the beam 1, that is in direction of the y-axis and the z-axis. As can be seen from Fig. 1, a disadvantage of the wave-lens elements is the uneven distribution of the beam 1 after passing the wave-lens elements 2. Therefore, the distribution of light at the target is uneven and more light is directed to the peripheral parts of the scene than to the centre.

Figs. 2a to 2c show the different positions of the wave-lens elements 2 for adjusting the scene coverage angle of the beam 1. Fig. 2a shows a first position of the wave-lens elements 2. Hereby, the largest angle α₁ of the beam is achieved. In the second position as shown in Fig. 2b the smallest angle α₂ of the beam 1 is achieved by a displacement of the wave-lens elements 2. The flash head according to the state of art has the disadvantage that only two positions are possible due to the wave-shape of the wave-lens elements 2. It can be seen from Fig. 2c that if the wave-lens elements 2 are in an intermediate position different than the positions as shown in Figs. 2a and 2b, then the resulting beam is asymmetrical and therefore not useful.

### SUMMARY

The general problem with state of the art flash devices for electronic equipments is that it is not compact enough to be implemented in an electronic equipment. Further, known electronic equipments do not spread the light beam evenly and do not allow a continuous changing of the illuminated angle.

The object of the present invention is therefore to provide a flash device for an electronic equipment for a wireless communication system as well as a method for operating such a flash device, which enable an evenly spread and symmetric light beam adjustable to different scene coverage angles.

The above-mentioned object is achieved by a flash device for an electronic equipment for a wireless communication system according to claim 1.

The electronic equipment according to the present invention comprises a flash device for an electronic equipment comprising a light source for producing a flash light, a reflector for collimating the light from the light source into a parallel light beam and two lens panels positioned in the parallel light beam and being movable in relation to each other for varying the coverage angle of the light beam, characterised in that each lens panel consists of a plurality of lenses and that the lens panels are movable in a direction parallel to the light beam.

The above-mentioned object is further achieved by a method for operating a flash device for an electronic equipment for a wireless communication system according to claim 14.

The method according to the present invention comprises the steps of producing a flash light by a light source, collimating the light from the light source into a parallel light beam by a reflector and varying the coverage angle of the light beam by positioning two lens panels in the parallel light beam, said lens panels being movable in relation to each other, characterised by providing lens panels consisting of a plurality of lenses and moving the lens panels in a direction parallel to the light beam.

In the context of the present application and the present invention, the term "electronic equipment for a wireless communication system" includes any kind of portable radio communication equipment. The term "portable radio communication equipment" includes all equipment such as mobile telephones, mobile cell phones, pagers, personal digital assistants, communicators, i.e. electronic organisers, smartphones or the like. The term "wireless communication system" relates to any kind of communication or telecommunication system which enables the wireless transfer of information.

It should be emphasised that the term "comprises/comprising" when used in this specification is taken to specify the presence of stated features, integers, steps or components but does not preclude the presence or addition of one or more other features, integers, steps, components or groups thereof.

Preferably, the lenses are spherical or aspherical lenses.

Further, preferably the lenses are positive lenses.

Advantageously, the first lens panel is located between the second lens panel and the reflector.

Further, advantageously, the lenses of the first panel are planar-convex lenses and the lenses of the second panel are convex-planar lenses.

In a preferred embobiment the convex surfaces of the lenses of the first panel face the convex surfaces of the lenses of the second panel.

Preferably, the reflector has a parabolic shape.

Further, preferably the light source is a Xenon flash lamp.

Advantageously, a displacement mechanism moves the lens panels in the direction parallel to the light beam.

Further, advantageously the first and the second lens panel are forced together by a spring.

In a preferred embodiment the distance between the first and the second lens panel is increased against the force of the spring by a distending means.

Advantageously, the lens panels each comprise at least one protrusion.

Preferably, the protrusions are guided along at least one bar in order to guide the movement of the lens panels.

### BRIEF DESCRIPTION OF THE DRAWINGS

In the following description preferred embodiments of the invention are explained in more detail in relation to the enclosed drawings, in which
Fig. 1 shows a flash device according to the state of art,
Figs. 2a to 2c show different positions of a flash device according to the state of art,
Fig. 3a shows a face-on view of a lens panel according to the present invention,
Fig. 3b shows a side view of a lens panel according to the present invention,
Figs. 4a and 4b show the optical principles underlying the present invention,
Figs. 5a and 5b show different positions of the lens panels according to the present invention,
Figs. 6a and 6b show a schematic overview of the flash device according to the present invention, and
Figs. 7a to 7c show the displacement mechanism for displacing the lens panels of the flash device according to the present invention.

### DETAILED DESCRIPTION OF EMBODIMENT

The present invention relates to a flash device for an electronic equipment for a wireless communication system. The electronic equipment hereby is able to transmit and receive information in a wireless communication system, such as e.g. the UMTS, the GSM or any other available wireless telecommunication system. It is to be noted that the electronic equipment in practice comprises all necessary means and units to be operated in the respective wireless communication system. For the sake of clarity, the present description only relates to the functionalities which are necessary to understand the present invention.

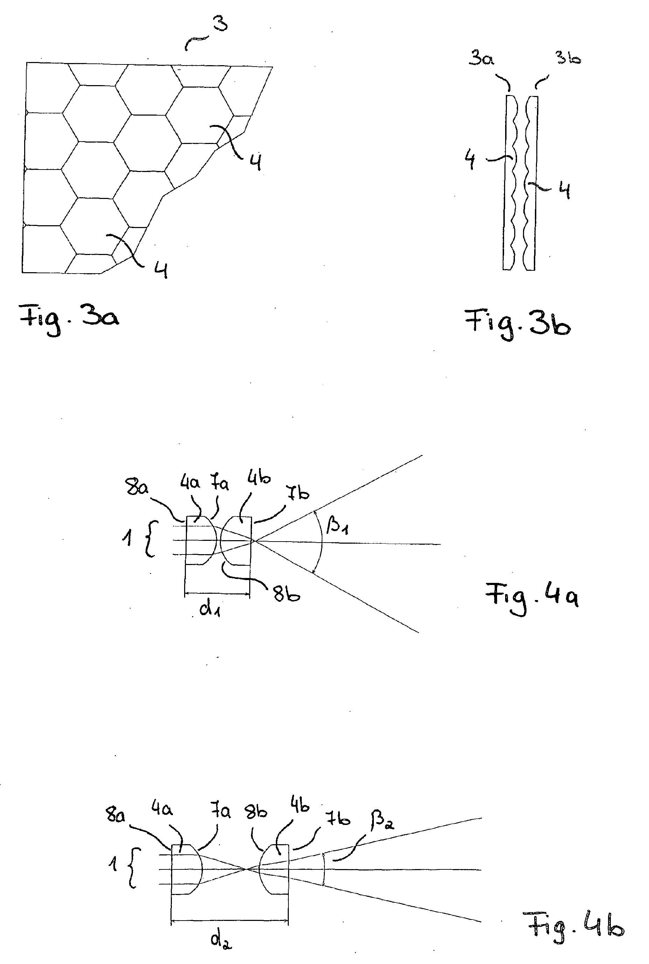

Fig. 3a shows a face-on view of a lens panel 3 according to the present invention. The lens panel 3 consists of a plurality of lenses 4 put together in a lens array thereby providing a flat lens panel. The lenses 4 are spherical or aspherical lenses. Specifically, the lenses 4 are positive lenses. The lenses 4 have a checker board shape, a honeycomb shape or any other shape that allows to add a plurality of lenses together without leaving any space between the lenses 4 thereby providing a continuous lens array 3. Fig. 3b shows a side view of a first lens panel 3a and a second lens panel 3b according to the present invention. Both lens panels 3a, 3b consist of a plurality of single lenses 4. Hereby, the lenses 4 of the first lens panel 3a are planar-convex lenses 4 and the lenses 4 of the second lens panel 3b are convex-planar lenses 4. The first and second lens panels 3a, 3b are placed with the convex surfaces of the lenses 4 facing each other. Hereby, each lens 4 of the first panel 3a is placed opposite to a lens 4 of the second panel 3b.

Figs. 4a and 4b show the optical principle underlying the present invention. A parallel light beam 1 is converged onto two lenses 4a, 4b. Hereby, the light beam 1 passes the first lens 4a and afterwards passes the second lens 4b. Hereby, the surface 8a of the first lens 4a which is nearest to the light source is planar, i.e. has an infinite radius, and the surface 7a of the first lens 4a facing the second lens 4b is convex, i.e. has a negative radius. The surface 8b of the second lens 4b facing the first lens 4a is convex, i.e. has a positive radius, and the surface 7b of the second lens 4b which is not facing the first lens 4a is planar, i.e. has an infinite radius. A parallel light beam 1 passing this lens array is spread over a certain angle depending on the distance of the two lenses. As can be seen in Fig. 4a with the shortest distance d₁ between the lenses the largest angle β₁ of the light beam can be achieved. In Fig. 4b a large distance d₂ of the lenses is shown with a small coverage angle β₂. By choosing a distance between the two lenses lying in the interval between d₁ and d₂ any coverage angle line between the angles of β₁ and β₂ can be achieved. As can be seen from Fig. 4a the maximum angle which can be illuminated is limited to the distance between the lenses which in turn depends on their focal length. The problem arising hereby is, that it is not possible to make a lens with a short focal length and enough size. This problem is overcome in the proposed invention by using lens arrays 3 consisting of a plurality of lenses 4 arranged in a flat array as has been explained with reference to figures 3a and 3b. An arrangement of two lens panels 3 as shown in Fig. 3b can cover a wide range of light covering wide angles. The arrangement of a plurality of small lenses 4 in a lens panel 3 shortens the effective focal length making the package thereby more compact.

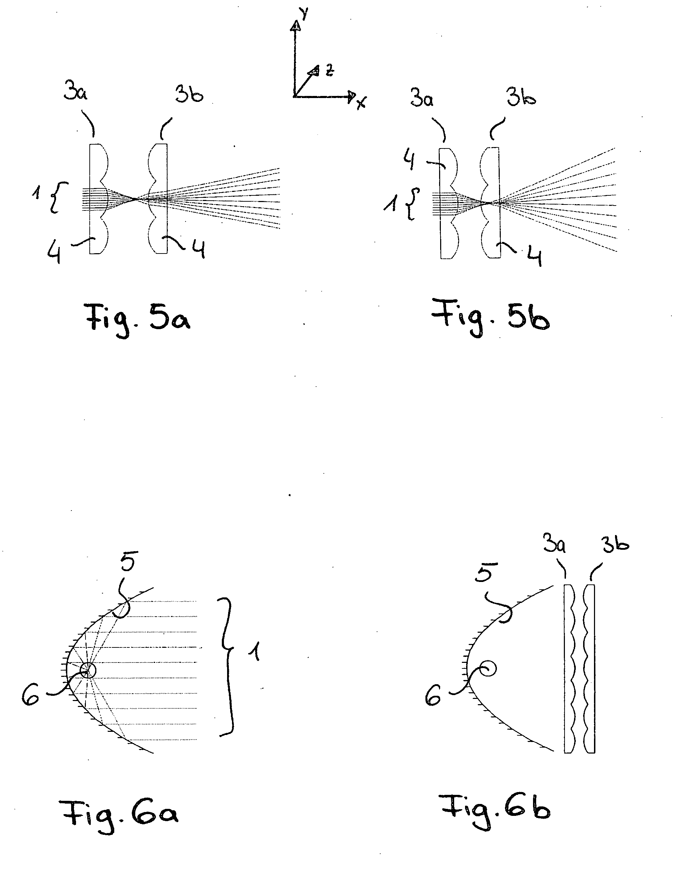

Figs. 5a and 5b show different positions of the lens panels according to the present invention. Hereby, the lens panels 3a, 3b are displaced in a direction parallel to the light beam 1. Thereby, the coverage angle of the light beam 1 can be changed. Hereby, when assuming that the beam 1 extends along the x-axis of an orthogonal coordinate system, then the lens panels 3a, 3b are moved in direction of this x-axis. An advantage of the present invention is, that due to the use of a plurality of spherical or aspherical lenses 4 for the lens panel 3a, 3b an even and symmetric light distribution is achieved. Further, as in the present invention, the lens panels are displaced in a direction parallel to the light beam 1, any distance between the lens panels 3a, 3b can be chosen thereby enabling any possible coverage angle of the beam 1. In any case independent of the distance between the lens panels 3a, 3b a symmetric an even light distribution is achieved.

Advantageously for the lens panels 3a, 3b according to the present invention a polymer is used having a refractive index of about 1,5. Thereby the lens panels can be displaced with relation to each other between the smallest distance d₁=1,7mm and the largest distance of d₂=3,1mm. This means that the total thickness of the two lens panels 3a, 3b is only 3,1mm at its maximum.

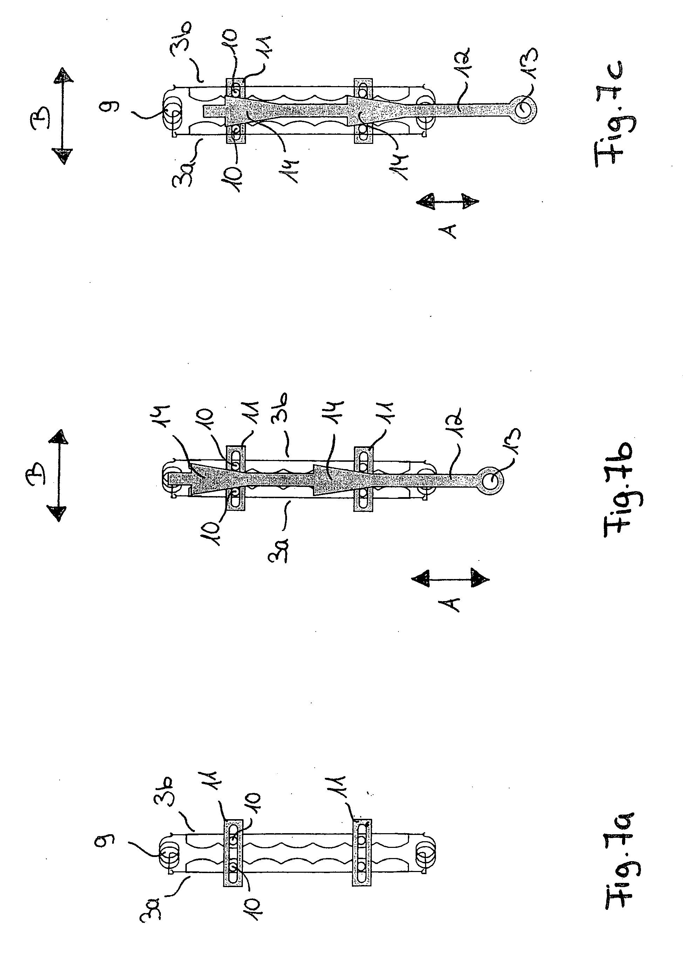

Figs. 6a and 6b show a flash device according to the present invention. A light source 6, which may be an LED, a Xenon flash lamp or any other discharge tube, emits a light beam which is collimated by a parabolic reflector 5 into a parallel light beam 1. In front of the reflector the first lens panel 3a and the second lens panel 3b is placed. The parallel light beam 1 then is converged onto the lens panels 3a, 3b and changed in its angle by displacing the lens panels with respect to each other.

Figs. 7a to 7c show an embodiment of the displacement mechanism 9, 10, 11, 12, 13, 14 for moving the lens panels 3a, 3b in the direction parallel to the light beam 1. The first and the second lens panel 3a, 3b hereby are forced together by a spring 9. Each of the lens panels 3a, 3b comprises a protrusion 10 which is guided along a bar 11 in order to guide the movement of the lens panels 3a, 3b. Herefor, the bar 11 comprises a cut-out into which the protrusions 10 extend. The bar 11 is fixed to an unmovable part of the electronic equipment in order to allow a movement of the lens panels 3a, 3b only in direction of the bar 11.

In order to increase the distance between the first and the second lens panel 3a, 3b against the force of the spring 9 a distending means 12, 13, 14 is provided. Herefor, a slide 12 is placed between the protrusions 10 of the two lens panels 3a, 3b. In order to enable an even movement of the lens panels 3a, 3b protrusions 10 are placed on the lens panels 3a, 3b on opposite sides of the slide 12. The slides 12 may be provided on top of the bar 11 or otherwise, in any case the protrusions 10 are at least as high as the bar 11 and the slide 12. The slide 12 comprises at least two wedge-shaped parts 14 which extend along the length of the slide 12. The wedge-shaped parts hereby are placed between protrusions 10 lying on opposite sides of the slide 12. By moving the slide 12 in direction A as shown in the figures, the distance between the protrusions 10 is increased which in turn increases the distance between the panels 3a, 3b and moves them in a direction indicated as B in the figures against the force of the spring 9. Fig. 7b shows the position of the slide 12 allowing the minimum distance between the lens panels 3a and 3b. Fig. 7c shows a second position of the slide 12, thereby providing the maximum distance between the lens panels 3a and 3b.

Further, a joining element 13 is attached to the slide 12 in order to connect the slide 12 to a mechanism to control the displacement of the lens panels 3a, 3b. For example, the joining element 13 may be connected to the camera's zoom in order to automatically adjust the distance between the lens panels 3a and 3b depending on the desired zoom.

With a flash device according to the present invention a compact format can be achieved which can be easily implemented in small consumer devices such as electronic equipments for wireless communication systems. Further, the flash device is easy to manufacture and can easily be connected mechanically to a camera zoom lens. In addition, the flash device according to the present invention provides an even and symmetric light distribution which can easily be adapted to a variety of different scene coverage angles.

## Claims

1. Flash device for an electronic equipment comprising
a light source (6) for producing a flash light,
a reflector (5) for collimating the light from the light source (6) into a parallel light beam (1) and
two lens panels (3a, 3b) positioned in the parallel light beam (1) and being movable in relation to each other for varying the coverage angle of the light beam (1),
**characterised in**
**that** each lens panel (3a, 3b) consists of a plurality of lenses (4) and
**that** the lens panels (3a, 3b) are movable in a direction parallel to the light beam (1).

2. Flash device according to claim 1,
whereby the lenses (4) are spherical or aspherical lenses.

3. Flash device according to claim 1 or 2,
whereby the lenses (4) are positive lenses.

4. Flash device according to claim 1, 2 or 3,
whereby the first lens panel (3a) is located between the second lens panel (3b) and the reflector (5).

5. Flash device according to claim 4,
whereby the lenses (4) of the first panel (3a) are planar-convex lenses and the lenses (4) of the second panel (3b) are convex-planar lenses.

6. Flash device according to claim 5,
whereby the convex surfaces of the lenses (4) of the first panel (3a) face the convex surfaces of the lenses (4) of the second panel (3b).

7. Flash device according to any of claims 1 to 6,
whereby the reflector (5) has a parabolic shape.

8. Flash device according to any of claims 1 to 7,
whereby the light source (6) is a Xenon flash lamp.

9. Flash device according to any of claims 1 to 8,
whereby a displacement mechanism (9, 10, 11, 12, 13, 14) moves the lens panels (3a, 3b) in the direction parallel to the light beam (1).

10. Flash device according to claim 9,
whereby the first and the second lens panel (3a, 3b) are forced together by a spring (9).

11. Flash device according to claim 10,
whereby the distance between the first and the second lens panel (3a, 3b) is increased against the force of the spring (9) by a distending means (12, 13, 14).

12. Flash device according to claim 9, 10 or 11,
whereby the lens panels (3a, 3b) each comprise at least one protrusion (10).

13. Flash device according to claim 12,
whereby the protrusions (10) are guided along at least one bar (11) in order to guide the movement of the lens panels (3a, 3b).

14. Method for operating a flash device for an electronic equipment comprising the steps of
producing a flash light by a flash discharge tube,
collimating the light from the flash discharge tube (6) into a parallel light beam (1) by a reflector (5) and
varying the coverage angle of the light beam (1) by positioning two lens panels (3a, 3b) in the parallel light beam (1), said lens panels (3a, 3b) being movable in relation to each other,
**characterised by**
providing lens panels (3a, 3b) consisting of a plurality of lenses (4) and
moving the lens panels (3a, 3b) in a direction parallel to the light beam (1).

15. Method according to claim 14,
whereby the lenses (4) are spherical or aspherical lenses.

16. Method according to claim 14 or 15,
whereby the lenses (4) are positive lenses.

17. Method according to claim 14, 15 or 16,
whereby the first lens panel (3a) is located between the second lens panel (3b) and the reflector (5).

18. Method according to claim 17,
whereby the lenses (4) of the first panel (3a) are planar-convex lenses and the lenses (4) of the second panel (3b) are convex-planar lenses.

19. Method according to claim 18,
whereby the convex surfaces of the lenses (4) of the first panel (3a) face the convex surfaces of the lenses (4) of the second panel (3b).

20. Method according to any of claims 14 to 19,
whereby the reflector (5) has a parabolic shape.

21. Method according to any of claims 14 to 20,
whereby the light source (6) is a Xenon flash lamp.

22. Method according to any of claims 14 to 21,
whereby a displacement mechanism (9, 10, 11, 12, 13, 14) moves the lens panels (3a, 3b) in the direction parallel to the light beam (1).

23. Method according to claim 22,
whereby the first and the second lens panel (3a, 3b) are forced together by a spring (9).

24. Method according to claim 23,
whereby the distance between the first and the second lens panel (3a, 3b) is increased against the force of the spring (9) by a distending means (12, 13, 14).

25. Method according to claim 22, 23 or 24,
whereby the lens panels (3a, 3b) each comprise at least one protrusion (10).

26. Method according to claim 25,
whereby the protrusions (10) are guided along at least one bar (11) in order to guide the movement of the lens panels (3a, 3b).
